# EUROPEAN PATENT APPLICATION

(11) **EP 4 666 827 A1**
(43) Date of publication of application: **24.12.2025**
(21) Application number: 25183788.6
(22) Date of filing: 18.06.2025
(51) Int. Cl.: A01B 79/00, A01C 21/00, A01M 7/00, B05B 12/00, G06N 3/08, B05B 12/12, G06Q 10/047, B05B 12/04, B05B 12/02

(54) **GENERATION OF SPRAYER ROUTES BASED ON CORRESPONDING SEEDER ROUTES**

(30) Priority: 20.06.2024 GB 202408912
(71) Applicant: AGCO International GmbH, 8212 Neuhausen am Rheinfall (CH)
(72) Inventor: BECH, Søren, DK8900 Randers (DK); LAUSDAHL, Kenneth, DK8900 Randers (DK); ZHOU, Kun, 8930 Randers (DK); NILSSON, Rene, DK8900 Randers (DK)
(74) Representative: AGCO Intellectual Property Department

(57) **Abstract**

Technologies for generating sprayer routes based on corresponding seeder routes. In some embodiments, a method includes receiving, by a computing system (102, 200), predetermined sprayer wayline information (106) (step 302). The predetermined sprayer wayline information includes predetermined waylines for a sprayer (110) to be operated in a field. The method also including receiving, by the computing system, seeder location information (104) (step 304). The seeder location information includes locations of a seeder (110a) moving and operating within the field at regular intervals of time. And, the method also including using, by the computing system, the received information as two separate inputs for a model (108) to generate sprayer route information (112) for the field (step 306).

## Description

### TECHNICAL FIELD

The present disclosure relates to methods and systems for automated planning of agricultural applicators in general, and more specifically, to methods and systems for automated planning of sprayer and seeder routes.

### BACKGROUND

It is known to perform path planning for various agricultural operations, such as for planting and spraying a crop field. Such planning is often performed manually by the operator of a farming machine in an attempt to enhance the agricultural operation in terms of efficiency and cost. More recently, computing systems have been developed that suggest operational paths to an operator of a mobile machine based on the task, field topography, etc.; however, there is much room for improvement on such systems. In some cases, route planning has relied on manual planning, expert knowledge, and simple computations (e.g., heuristic algorithms) performed by computing systems. However, such planning does not consider the complex interactions between various factors, such as terrain, machinery capabilities, soil type, and ground and weather conditions. This is especially the case with planning applicator routes for a crop field, such as sprayer routes, spreader routes, planter routes, or seeder routes for a crop field.

Creating a good application route in a field is challenging if the driver or operator is unfamiliar with the field. This includes the placement of an initial tramline if not already present from an initial application operation. Also, how to traverse the field in general can be complicated initially. Also, with the complex interactions not being considered, resulting route planning can include subpar paths and increased fuel consumption, which ultimately results in higher operational costs and reduced productivity. Thus, it would be advantageous to provide a system (and associated method) which overcomes or at least mitigates one or more problems associated with the prior art systems and considers complex interactions between various factors.

### SUMMARY

Described herein are techniques for generating applicator routes or route information based on a model and corresponding initial applicator routes, route information, or a derivative thereof that is used as input for the model. For example, described herein are techniques for generating sprayer routes or additional seeder routes based on a model and corresponding seeder routes or a derivative thereof that is used as input for the model. The techniques disclosed herein provide specific technical solutions to at least overcome the technical problems mentioned in the background section or other parts of the application as well as other technical problems not described herein but recognized by those skilled in the art.

In some embodiments, the techniques include technologies that generate sprayer routes or additional seeder routes based on a model and corresponding seeder routes or a derivative thereof. With respect to some embodiments, disclosed herein are computerized methods for generating sprayer routes or additional seeder routes based on a model and corresponding seeder routes or a derivative thereof, as well as a non-transitory computer-readable storage medium for carrying out technical operations of the computerized methods. The non-transitory computer-readable storage medium has tangibly stored thereon, or tangibly encoded thereon, computer-readable instructions that when executed by one or more devices (e.g., one or more personal computers or servers) cause at least one processor to perform a method for improved systems and methods for generating sprayer routes or additional seeder routes based on a model and corresponding seeder routes or a derivative thereof.

In some cases, the technologies use a machine learning or deep learning based model to assist in the generation of sprayer routes or additional seeder routes based on corresponding seeder routes or a derivative thereof. Also, in some examples, the technologies described herein can leverage another type of model that is not trained via machine learning or deep learning, such as a predetermined and static rules-based model for generating sprayer routes or additional seeder routes based on corresponding seeder routes or a derivative thereof. Furthermore, in some examples, the technologies described herein can use a model that is trained or frequently updated by a computing technique or other type of technique other than machine learning or deep learning, such as a dynamic rules-based model for generating sprayer routes or additional seeder routes based on corresponding seeder routes or a derivative thereof.

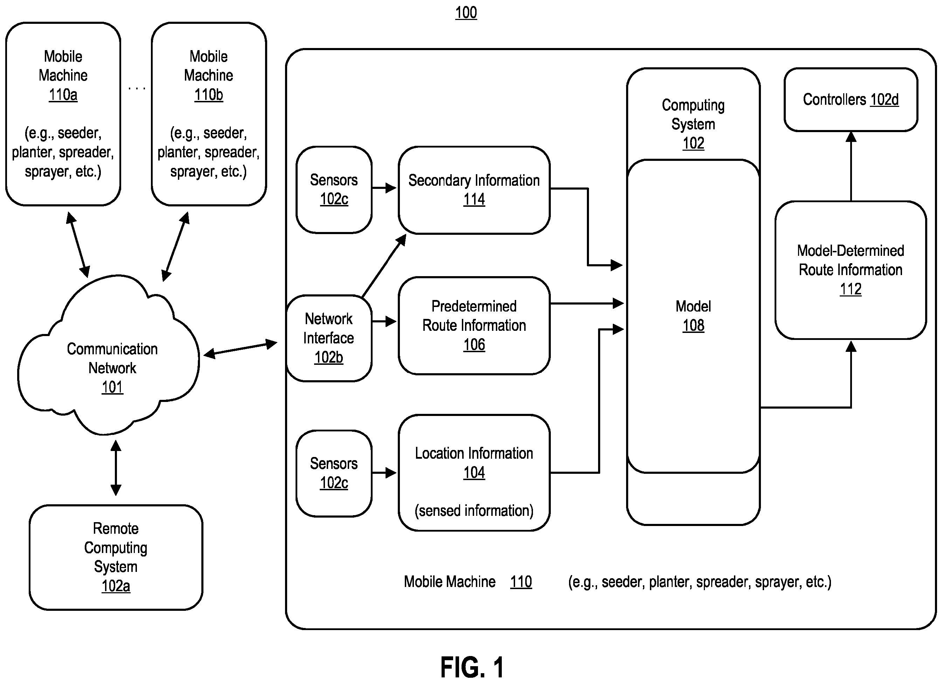

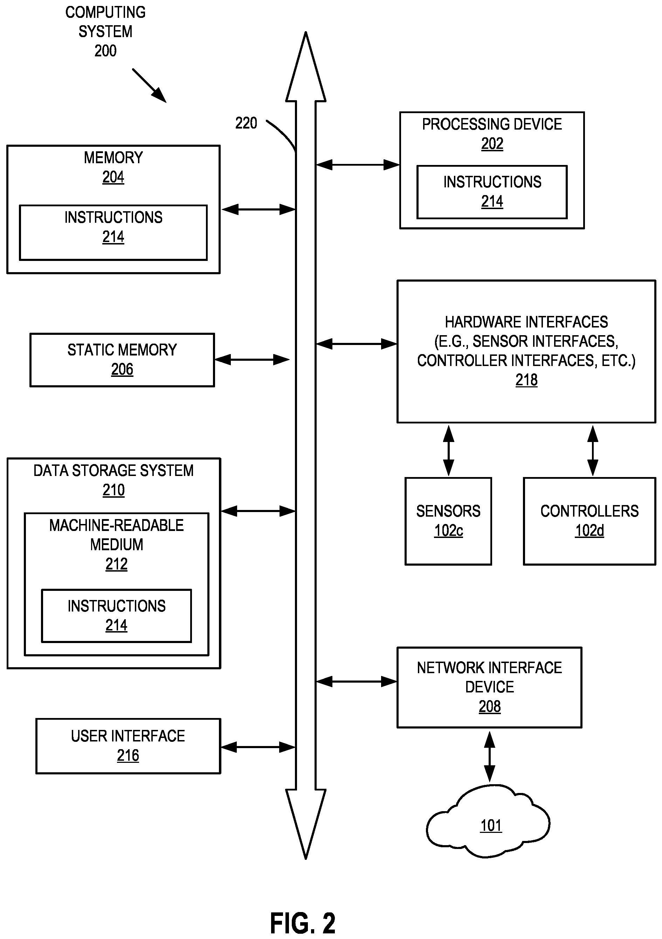

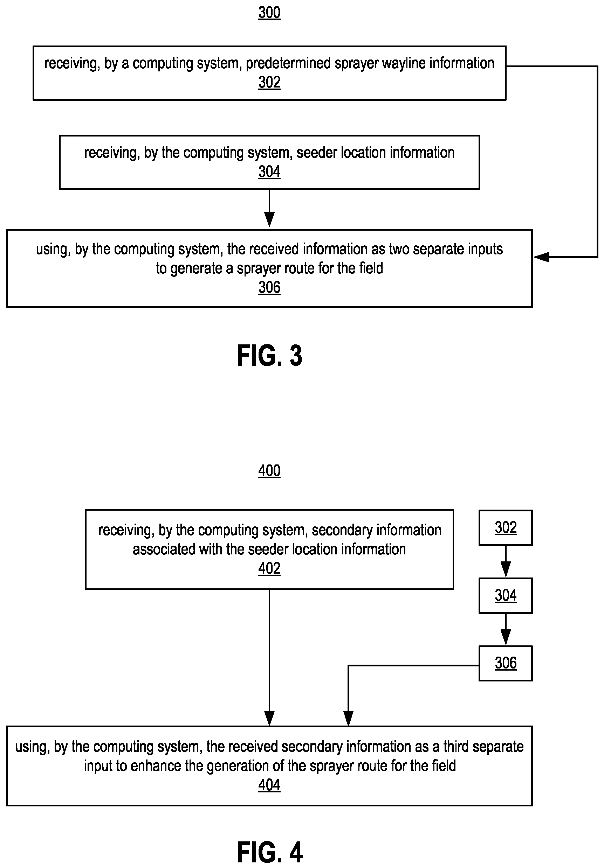

Some embodiments include a method for generating sprayer routes or additional seeder routes based on a model and corresponding seeder routes or a derivative thereof that is used as input for the model. In some examples, the method includes receiving, by a computing system (e.g., see computing system 102 or 102a shown in FIG. 1 and computing system 200 shown in FIG. 2), predetermined sprayer wayline information (e.g., see predetermined route information 106 shown in FIG. 1, and see step 302 of method 300 shown in FIG. 3). The predetermined sprayer wayline information including predetermined waylines for a sprayer to be operated in a field (e.g., see mobile machine 110-which can be a sprayer). The method also includes receiving, by the computing system, seeder location information (e.g., see location information 104 and step 304 shown in FIGS. 1 and 3 respectively). The seeder location information including locations of a seeder (e.g., see mobile machine 110a-which can be a sprayer) moving and operating within the field at regular intervals of time. The method also includes using, by the computing system, the received information as two separate inputs for a model (e.g., see model 108) to generate sprayer route information (e.g., see model-determined route information 112 and step 306 shown in respective FIGS. 1 and 3). The sprayer route information including a route for the sprayer in the field. In some cases, the method alternatively includes using, by the computing system, the received information as two separate inputs for a model (e.g., see model 108) to generate additional seeder route information (e.g., see model-determined route information 112). The additional seeder route information including a route for an additional seeder to further plant seeds in the field.

Throughout the disclosure herein, the majority of examples refer to the use of the received information as two separate inputs of the model to generate sprayer route information; however, it is to be understood that such received information can be used as inputs of the model to generate additional seeder route information too. Also, throughout the disclosure herein, the majority of examples refer to the use and generation of routes or route information of seeders and sprayers; however, it is to be understood that some embodiments include the use and generation of routes and route information for applicators in general, which include, but are not limited to, seeders, planters, spreaders, and sprayers.

In some embodiments, the predetermined sprayer wayline information (e.g., see information 106) is derived from tramline information related corresponding to the tramlines in the field. In some embodiments, the predetermined sprayer wayline information is derived from a width of the sprayer. In some examples, the predetermined sprayer wayline information is derived from a categorization of the sprayer. In some cases, the categorization relates to a controlled traffic farming (CTF) score of the sprayer.

In some embodiments, the method further includes receiving, by the computing system, secondary information (e.g., see secondary information 114 shown in FIG. 1) associated with the seeder location information (e.g., see information 104, and see step 402 of method 400 shown in FIG. 4). The received secondary information can be from within a time period including the regular intervals of time. Also, in some examples, the method includes using, by the computing system, the received secondary information as a third separate input to enhance the generation of the sprayer route information (e.g., see step 404 of method 400). In some examples, the received secondary information includes topographical information of the field. In some cases, the topographical information of the field is collected during the operation of the one or more seeders during the regular intervals of time. In some embodiments, the received secondary information includes field size information, field shape information, field elevation information, field topographical information, soil type information, soil condition information, crop type information, crop lodging information, soil compaction information, weed density information, weed location information, field weather conditions information, or any combination thereof.

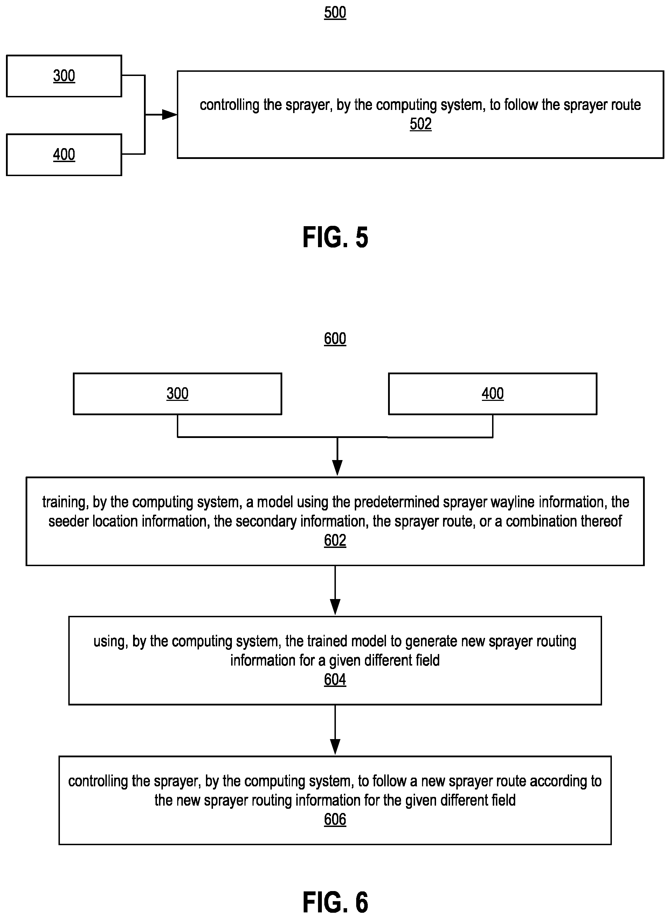

In some embodiments, the predetermined sprayer wayline information (e.g., see information 106) includes first initial waylines. In some cases, the seeder location information (e.g., see location information 104) includes second initial waylines. In some cases, the sprayer route information (e.g., see determined information 112) includes new waylines. In some embodiments, the method further includes controlling the sprayer (e.g., see machine 110), by the computing system, to follow the route of the sprayer route information, such as following the new waylines (e.g., see information 112 and controllers 102d as well as see step 502 of method 500 shown in FIG. 5). In some cases, the generation of the sprayer route information generates a route to minimize fuel consumption by the sprayer during execution of the route. In some cases, the generation of the sprayer route information generates a route to minimize operation time of the sprayer during execution of the route. Also, in some examples, the generation of the sprayer route information generates a route to minimize soil compaction caused by the sprayer during execution of the route. In some embodiments, the route planning can consider multiple sprayers with similar or different capacities, depending on the embodiment. In some cases, the larger the sprayer unit, the more workload it can be assigned. Just to mention a few examples, other factors the model can consider in determining new route information include the kinematics of the sprayer or a seeder to make sure that the mobile machine can drive the route and not tip over from the topography. Also, traction reduction from environmental causes such as loose or wet ground can be considered by the model. Furthermore, the generation of the sprayer route information generates a route to minimize crop damage by the sprayer during execution of the route.

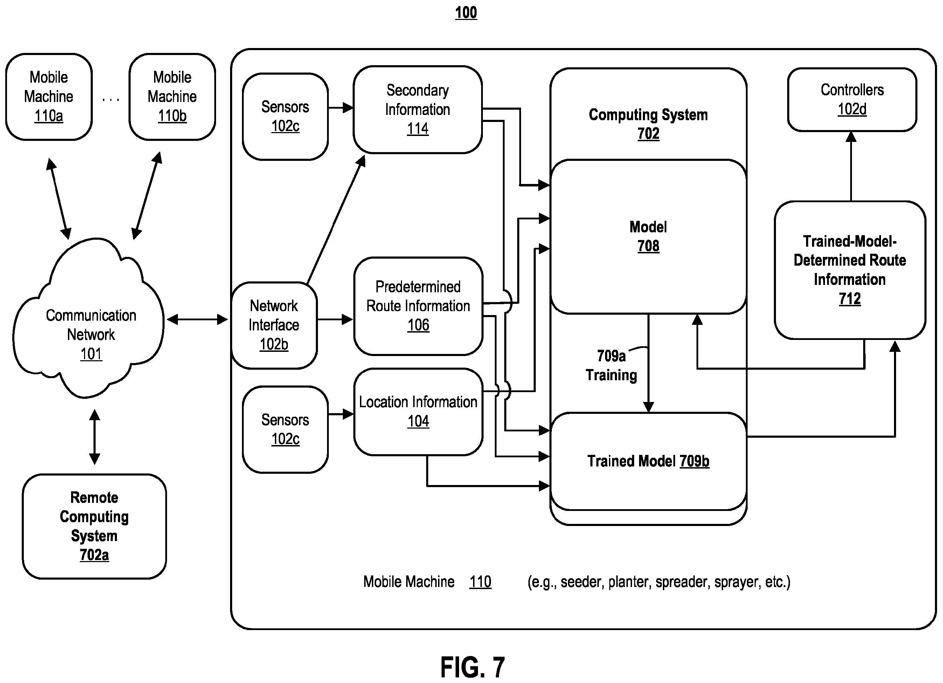

In some embodiments, the method further includes training, by the computing system, the model (e.g., see model 708 shown in FIG. 7) using the predetermined sprayer wayline information (e.g., see information 106), the seeder location information (e.g., see information 104), the secondary information (e.g., see information 114), the sprayer route information (e.g., see determined information 712 shown in FIG 7 or information 112 shown in FIG. 1), or a combination thereof (e.g., see step 602 of method 600 depicted in FIG. 6). And, in such cases, the method can further include using, by the computing system, the trained model (e.g., see trained model 709b) to generate new sprayer routing information (e.g., see information 712) for a given different field (e.g., see step 604). The method can also include, in some cases, controlling the sprayer, by the computing system, to follow a new sprayer route of the sprayer route information according to the new sprayer routing information for the given different field that is outputted by the trained model (e.g., see step 606). In some of such examples, the predetermined sprayer wayline information includes first initial waylines, the seeder location information includes second initial waylines, the sprayer route includes third initial waylines, and the new sprayer routing information includes new waylines for the given different field. In some of these examples and other embodiments, the given different field is the same field but with updated parameters for the field.

These and other important aspects of the invention are described more fully in the detailed description below. The invention is not limited to the particular methods and systems described herein. Other embodiments can be used and changes to the described embodiments can be made without departing from the scope of the claims that follow the detailed description. Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various example embodiments of the disclosure.
FIGS. 1 and 7 illustrate two different example technical solutions to the example technical problems described herein, in accordance with some embodiments of the present disclosure.
FIG. 2 illustrates a block diagram of example aspects of a computing system, in accordance with some embodiments of the present disclosure.
FIGS. 3 to 6 and 8 illustrate methods in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications, and equivalents as will become apparent from consideration of the following detailed description and other parts of this disclosure.

Described herein are techniques for generating sprayer routes or additional seeder routes based on a model and corresponding seeder routes or a derivative thereof that is used as input for the model. The techniques disclosed herein provide specific technical solutions to at least overcome the technical problems mentioned in the background section or other parts of the application as well as other technical problems not described herein but recognized by those skilled in the art. Specifically, some of the example technologies include techniques for generating sprayer routes or additional seeder routes based on corresponding initial seeder routes for a field. In some embodiments, a method includes receiving, by a computing system (e.g., see systems 102 and 200 shown in FIGS. 1 and 2 respectively), predetermined sprayer wayline information (e.g., see predetermined route information 106 shown in FIG. 1 as well as step 302 shown in FIG. 3). The predetermined sprayer wayline information can include predetermined waylines for a sprayer to be operated in a particular field. The method also can include receiving, by the computing system, seeder location information (e.g., see location information 104 and step 304 depicted in respective FIGS. 1 and 3). The seeder location information can include locations of a seeder moving and operating within the field at regular intervals of time. And, the method can also include using, by the computing system, the received information as two separate inputs for a model (e.g., see model 108) to generate sprayer route information (e.g., see determined route information 112) for the field (e.g., see step 306). Alternatively, the method can include using, by the computing system, the received information as two separate inputs for the model to generate additional seeder route information for the field. Sometimes after a seeding operation, an additional seeding operation is needed to complete the planting of seeds in a field. Besides enhancing the planning of spraying after planting, the techniques described herein can also facilitate the planning of additional seeding or planting in general.

The techniques disclosed herein can resolve many problems in route determinations of planters, seeders, spreaders, and sprayers stemming from the complex nature of such determinations. The technologies disclosed herein include a system that can generate spraying routes or additional seeding or planting routes based on seeding or planting operation logs. A farming machine operator can on- or offboard load a seeding or planting operation log and directly generate a full infield route for a proceeding spraying operation or an additional seeding or planting task based on the log, some additional information, and a model that uses such information as input.

FIG. 1 illustrates an example technical solution to the example technical problems described herein, such as a solution for providing the aforementioned full infield route of a seeder, planter, sprayer, or spreader, or an additional planter, seeder, sprayer, or spreader. The technical solution, shown in FIG. 1, can include or be a part of the techniques and technologies described herein (such as method 300, method 400, or method 500) and can provide specific technical solutions to at least overcome the technical problems mentioned in the background section or other parts of the application as well as other technical problems not described herein but recognized by those skilled in the art.

FIG. 1 depicts a network 100, such as a computer network, within which a computing system 102 receives various inputs (e.g., see machine location information 104, predetermined route information 106, and secondary information 114). These inputs and others can be received from other computing systems within the network 100 or from sensor systems in the network. The various inputs can include or are related to some of the efficiencies and factors (such as operational time efficiency, fuel efficiency, reduced soil compaction, and machine capabilities) that are considered by the computing system in route planning and the determination of routes within a field. As shown, the computing system includes a model 108 that can be used to determine the model-determined route information. As shown, the route information 112 is an output of the model 108 and can be an input for controllers 102d.

Also, as shown, the computing system 102 is a part of a mobile machine 110 or the network 100 depending on the embodiment as are the inputs and outputs of the computing system (including the inputs and the outputs of the model 108). In some embodiments, the computing system 102 and the inputs and outputs of the computing system are part of a remote system in that the remote system is physically and geographically separated from the mobile machine 110 but communicates with a system or controller of the machine over a telecommunications or computer network (such as network 100). The mobile machine 110 can be or include a seeder or a sprayer. The mobile machine 110 can also be configured to follow routing instructions entirely or to some extent via a control system (e.g., see route information 112 which can include routing instructions for the automated control of the machine via one or more of controllers 102d).

The computing system 102 includes electronics such as one or more controllers, sensors, busses, and computers. The computing system 102 includes at least a processor, memory, and a communication interface and can include one or more sensors, which can make the mobile machine 110 an individual computing device. In the case of the network 100 including the Internet, the mobile machine 110 can be considered an Internet of Things (IoT) device. Also, in some embodiments, the computing system 102 is a part of a cloud computing system. The computing system 102 and the mobile machine 110 can include both electronic hardware and software that can integrate between the systems of the computing system and the mobile machine 110. And, such hardware and software (such as controllers and sensors and other types of electrical and/or mechanical devices) can be configured to a communicate with a remote computing system via the communications network 100.

As mentioned, the mobile machine 110 and the other mobile machines shown in FIG. 1, as well as FIG. 7, are agricultural machines such as applicators (e.g., seeders, planters, spreaders, sprayers, etc.). In some embodiments, the mobile machine 110 can be or include a vehicle in that it is self-propelling. Also, in some embodiments, the mobile machine 110 can be a part of a group of similar machines or a group of different types of mobile machines.

The network 100 can include one or more local area networks (LAN(s)) and/or one or more wide area networks (WAN(s)). In some embodiments, the network 100 includes the Internet and/or any other type of interconnected communications network. The network 100 can also include a single computer network or a telecommunications network. More specifically, in some embodiments, the network 100 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including computing system 102) can be or include a computing system that includes memory that includes media. The media includes or is volatile memory components, non-volatile memory components, or a combination thereof. In general, in some embodiments, each of the computing systems includes a host system that uses memory. For example, the host system writes data to the memory and reads data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

In some examples, the mobile machine location information 104 includes a series of time-stamped locations of the mobile machine 110 as it moves through an area of land during a time period. As shown, the location information 104 is received from some of the sensors 102c. In some embodiments, the linking of the geographic location (e.g., GPS coordinates) of the mobile machine 110 to a date and time (such as via a timestamp) includes geotagging the date and time or the time stamp. Such tagging can include adding geographical identification metadata to an item including the image or a file of data that has date and time information associated with it. In some embodiments, the metadata can be embedded in the image or the item. And, in some embodiments, the metadata is stored separately and linked to the image or the item. The item can be a data log, a control system or sensor output signal, an image file, an image stream, an image object, etc. Also, in some embodiments, the item is a data log, a control system or sensor output signal, an image file or a video file, a media feed, a message file, or another type of item that is configurable to include a time and date information such as a timestamp and that can be geotagged. And, in some embodiments, the metadata related to the geotag includes latitude and longitude coordinates, altitude, bearing, distance, accuracy data, a place name, and/or a time stamp.

In some embodiments, the computing system 102 can link the mobile machine location information 104 to the other types of information of the system (e.g., predetermined route information 106, model-determined route information 112, and secondary information 114) via identifiers of parts of the information, which can become a part of the metadata before or after being linked to the location information 104. This makes the geotagging advanced geotagging. In some embodiments, a location tracking system configured to retrieve at least part of the location information 104 includes a GPS or is part of a GPS (e.g., which can be one or more of the sensors of the mobile machine 110). In some embodiments, a camera is attached to the mobile machine 110 and the camera can record information about or near the machine such as some of the secondary information 114; and, the location tracking system can geotag the information 106, 112, and 114.

As mentioned, the techniques disclosed herein can resolve many problems in route determinations of planters, seeders, spreaders, and sprayers stemming from the complex nature of such determinations, including the model-based or trained-model-based determination of the new route (e.g., see model-determined route information 112, and see trained-model-determined route information 712 shown in FIG. 7). In some embodiments, the technologies disclosed herein include a system that can generate spraying routes or additional seeding or planting routes based on seeding or planting operation logs (e.g., see mobile machine location information 104). A farming machine operator can on- or offboard load a seeding or planting operation log (e.g., see mobile machine location information 104) and directly generate a full infield route for a proceeding spraying operation or an additional seeding or planting task (e.g., see (e.g., see route information 112) based on the log, predetermined route information (e.g., see information 106), and a corresponding model (e.g., see model-determined route information 112 and see trained-model-determined route information 712).

The generation of the new route or route information (such as determined route information 112 or 712) includes predetermining waylines of the sprayer (or another type of applicator, e.g., spreader, seeder, planter, etc.). For example, see predetermined route information 106. There are three main ways to perform the predetermination of the waylines that can be found in the received information 106; however, there are other means for performing the predetermination step that can be applied to some embodiments besides using one of the three main ways. The first main way to perform the predetermination of the initial waylines or of an initial route, in general, of the information 106 includes using recorded tramlines for a particular field and deriving the predetermined waylines or route for the mobile machine (or sprayer) based on the recorded tramlines. The second main way to perform the predetermination of the initial waylines or route of the information 106 is to use known controlled traffic farming (CTF) processes to align recorded waylines of a seeder, planter, spreader, or sprayer with waylines of another seeder, planter, spreader, or sprayer. In general, CTF processes take farming machinery size and weight and historical soil compaction to determine such alignments. In some examples, the CTF processes determine an offset for a new wayline or route determination for the applicator or an additional applicator. The third main way that can be used to determine some of information 106 is a lesser alternative and can be used when the CTF processes are not available due to a lack of information about the machines or field. Replacement techniques can be used to less effectively align waylines and determine offsets for the new waylines or route of the information 106. The third way may not be as effective as the second way since it relies at least partially on predicted information instead of known information on the machines or field.

As suggested, the generation of the new route (e.g., see model-determined route information 112 and see trained-model-determined route information 712) also includes using a recorded time sequence of locations of the mobile machine during a seeding or planting operation in the field (e.g., see location information 104), which can include historical information or data record immediately before the determination. The time sequence or machine location information can then be used to determine how to traverse the field in the near or immediate future. This ensures that the sprayer or spreader or additional seeder or planter will traverse the new waylines in an effective manner corresponding to prior waylines of the initial seeder or planter (e.g., see information 106). In some cases, the new route (e.g., see determined information 112 or 712) does not constrain the sprayer or spreader or additional seeder or planter to travel in the same direction of the waylines as the initial seeder or planter, but it can ensure that the field is operated on completely with the new route. In some embodiments, the output or new route information (e.g., see information 112 or 712) includes a series of wayline pairs or wayline offsets per initial wayline of the initial operation (e.g., see location information 104 which can include the initial waylines). In some examples, the location information 104, the predetermined route information 106, the determined route information 112 or 712, and even secondary information 114 can be communicated to a guidance controller of the sprayer or spreader or additional seeder or planter. Also, in some cases, such information can be encoded as a single spline where all intermediate turns are also generated according to the kinematic model of the sprayer or spreader or additional seeder or planter.

In some embodiments, the new route of the sprayer or spreader or additional seeder or planter is further improved by the system by considering the topography of the field (e.g., see information 114 --which can be collected by at least one of the sensors 102c during an operation on the field). Also, other secondary information (e.g., see information 114) can be used to improve the determination of the new route (e.g., see model-determined route information 112 or trained-model-determined route information 712). For example, a basic formula ranking uphill travel in a field can be used. Or, an advanced method can be used that considers topography and weather or soil conditions, for example. The advanced method can also include consideration of current sprayer liquid or planter seed amounts during the operation in the field, which can also be information found in the secondary information 114. The eventual output (e.g., see information 112 or 712) can include an enhanced route that considers downward travel is preferred with high liquid or seed levels in a tank of the machine or upward travel is preferred with low liquid or seed levels in the tank.

In some examples, the model-determined route information 112 (as well as the trained-model-determined route information 712, shown in FIG. 7) includes information regarding routes for fields and as well as complementary information corresponding to routes such as environmental or mobile machine operations factors, parameters, variables, and conditions that can be derived from the secondary information 114. Also, the route information 112 (or the route information 712) can include model-generated bounding boxes, waylines, route turns, spacing between waylines, more optimal scheduling parameters, and wayline headlands, for example. Also, the route information 112 (or the route information 712)can include primary and secondary factors and constraints to generate routes via another model or trained model (such as the trained model 709b shown in FIG. 7). For instance, the information 112 (or information 712) can include a steering angle constraint (e.g., a curvature constraint) of a mobile machine that can be used by the system to generate waylines producing minimum possible overlap with adjacent waylines while reducing that amount and extent of skipped areas of the field.

In some examples, the secondary information 114 can include bird's-eye view information that includes images from above fields captured by cameras of a satellite in orbit. In some cases, the bird's-eye view information includes images from above of fields captured by cameras of a drone flying above the fields. In some cases, the weather data can be part of bird's-eye view information and the weather data can include one or more datasets collected from one or more satellites, radiosondes, etc. Also, in some examples, with the addition of satellite or drone images (such as used by the normalized difference vegetation index or NDVI), a prediction of the crop state can be made and routes can be generated or updated accordingly (such as by part of the model 108, or such as by model 708 shown in FIG. 7). This can assist in narrowing the type of field operation or the status of it which can be used to route plan.

In some examples, the secondary information 114 includes machine operation information that can include machine operation signals of the mobile machine that include machine operations data related to operations of the mobile machine. The machine operation information can be received from sensors, for example. The machine operation information can relate to implement positions or heights. In some embodiments, the machine operation information can include one or more of the implement or actuator operation speeds or rates. In some embodiments, machine operation information can include one or more of dispensing rates, evacuation rates, flow rates, spray rates, seeding rates, or some combination thereof. In some embodiments, the machine operation information includes one or more of mobile machine default ground speeds, mobile machine maximum ground speeds, mobile machine minimum ground speeds, or some combination thereof. In some embodiments, the machine operation information includes one or more of default hydraulic pressures, maximum hydraulic pressures, or minimum hydraulic pressures, or one or more of default operating temperatures or pressures, maximum operating temperatures or pressures, or minimum operating temperatures or pressures, or some combination thereof. Depending on the embodiment, an implement can include one or more of any hydromechanical or electromechanical work tools used by an applicator such as a sprayer, spreader, seeder, or a planter. For example, depending on the embodiment, an implement can include one or more of farming implements such as implements that till the ground (e.g., plows, offset discs, chisels, etc.), plant seeds, or transplant seedlings (e.g., seeders, planters, transplanters, etc.), harvest crops (e.g., reapers, threshers, gatherers, winnowers, or combines), bale, or perform other farming tasks such as spraying crops (e.g., sprayers).

In some examples, the secondary information 114 includes environmental factors occurring during a time period associated with the operations of the mobile machine. In some examples, the environmental factors include at least one of wind speed, wind direction, temperature, humidity, daytime duration, and cloud cover. In some cases, the environmental factors include crop type. In some embodiments, the secondary information 114 includes one or more of field crop information, wind direction or speed, ambient temperature, ambient humidity, soil characteristics, time of day, date, and geographic region. In some embodiments, the field crop information includes one or more of crop heights, crop color, crop moisture, crop lodging, and weed information. In some embodiments, the mobile machine is a harvester and the secondary information includes one or more of ground speed, fuel efficiency, crop throughput, crop quality (e.g., crop quality can include the number of kernels of grain that are cracked or broken), crop cleanliness, and crop yield. In some cases, the secondary information 114 includes field information having one or more of field size information, field shape information, field elevation information, field topology information, soil type information, soil condition information, crop type information, crop lodging information, soil compaction information, weed density information, and weed location information. In some embodiments, the field information is recorded field information recorded from one or more fields, or the field information is predetermined or preselected field information from known field attributes, or some combination thereof.

In some embodiments, the secondary information 114 includes weather data, ambient condition data, time of year data, geographic region data, or any combination thereof. In some cases, the secondary information 114 includes weather data that includes one or more of datasets collected from one or more of thermometers, barometers, radar, wind vanes, anemometers, transmissometers, hygrometers, etc. The datasets can include measured temperature, air pressure, rain or snow locations, wind direction, wind speed, atmospheric visibility, humidity, etc. In some cases, the weather data includes one or more datasets collected from one or more satellites, radiosondes, etc.

The secondary information 114 can be used as input for the user interface. Also, the secondary information 114 can be used as input for training the model (e.g., see the training 709a shown in FIG. 7). The secondary information 114 as well as any other information used as input for the model 108 that comes from complex data sources such as images can be derived in part from feature extractions. Feature extractions can include extracting relevant features from the information containing environmental factors, machine operating conditions, machine statuses and machine parts statuses, the machine settings, or recorded results of operations. And, the model or type of model to be used can be determined based on or prior to the feature extractions. The model selection can include choosing a suitable machine learning model or deep learning model, such as a deep learning model for sequence-based data, such as recurrent neural networks (RNNs), long short-term memory (LSTM) networks, or transformer-based models. Such models are capable of capturing temporal dependencies and learning complex patterns in the data. In some embodiments, the trained model (e.g., see trained model 709b depicted in FIG. 7) includes at least one of RNNs, LSTM networks, or transformer-based models. In some embodiments, the training 709a or any of the training that occurs in the steps of methods described herein is according to preprocessed data that includes the extracted features from the feature extraction as input sequences.

FIG. 2 illustrates a block diagram of example aspects of a computing system 200 that can implement the technical solution shown in FIG. 1 or FIG. 7 or each computing part of the solution (e.g., see computing systems 102 and 102a or systems 702 and 702a). Also, FIG. 2 illustrates parts of the computing system 200 within which a set of instructions are executed for causing a machine (such as a computer processor or processing device 202) to perform any one or more of the methodologies discussed herein performed by a computing system (e.g., see the method steps of the methods 300, 400, 500, 600, and 800 shown in FIGS. 3, 4, 5, 6, and 8 respectively). In some embodiments, the computing system 200 operates with additional computing systems to provide increased computing capacity in which multiple computing systems operate together to perform any one or more of the methodologies discussed herein that are performed by a computing system (e.g., also see the computing system 102 or 702 that is connected and interoperable with the remote computing system 102a or 702a to provide increased computing capacity).

In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in a client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 220. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application-specific integrated circuit (ASIC), a field programmable gate array (FPGA), a digital signal processor (DSP), a network processor, or the like. The processing device 202 is configured to execute instructions 214 for performing the operations discussed herein performed by a computing system. In some embodiments, the computing system 200 includes a network interface device 208 (e.g., see network interface 102b) to communicate over a communications network (e.g., see communications network 101). Such a communications network can include one or more local area networks (LAN(s)) and/or one or more wide area networks (WAN(s)). In some embodiments, the communications network includes the Internet and/or any other type of interconnected communications network. The communications network can also include a single computer network or a telecommunications network.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media. While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that causes the machine to perform any one or more of the methodologies of the present disclosure performed by a computing system. The term "machine-readable storage medium" shall accordingly be taken to include solidstate memories, optical media, or magnetic media.

Also, as shown, the computing system 200 includes user interface or UI 216 that includes a display, in some embodiments, and, for example, implements functionality corresponding to any one of the UI devices disclosed herein. A UI, such as UI 216, or a UI device described herein includes any space or equipment where interactions between humans and machines occur. A UI described herein allows operation and control of the machine from a human user, while the machine simultaneously provides feedback information to the user. Examples of a user interface, or UI device include the interactive aspects of computer operating systems (such as GUIs), machinery operator controls, and process controls.

Also, as shown, the computing system 200 includes hardware interfaces 218 that include sensor interfaces to interface sensors to the computing system (e.g., see sensors 102c) and controller interfaces to interface controllers to the computing system (e.g., see controllers 102d). The interfaces 218 can implement at least some of the functionality corresponding to the respective hardware devices that they interface with. The interfaces 218 can provide the connections for the communications between the computing system 200 and any one of the electronics described herein such as any one of the controllers described herein or sensors described herein.

Some embodiments described herein include a method for generating applicator routes, such as seeder, planter, spreader, or sprayer routes, based on a model and corresponding initial applicator routes or a derivative thereof that is used as input for the model. For example, FIGS. 3 to 6 illustrate methods in accordance with some of such embodiments. Also, although much of the description of the methods 300, 400, 500, and 600 refers to the use and generation of routes or route information of seeders and sprayers, it is to be understood that some embodiments include the use and generation of routes and route information for applicators in general, which include, but are not limited to, seeders, planters, spreaders, and sprayers.

Methods 300, 400, 500, and 600 of the corresponding figures are performed by any one of the computing systems described herein (e.g., see computing system 102, 102a, or 200 depicted in FIGS. 1 and 2 respectively). In some systems of the technologies disclosed herein, any steps of embodiments of the methods described herein are implementable by executing instructions corresponding to the steps, which are stored in memory (such as the instructions 214).

As shown in FIG. 3, method 300 begins with step 302, which includes receiving, by a computing system (e.g., see computing system 102 or 102a shown in FIG. 1 and computing system 200 shown in FIG. 2) predetermined sprayer wayline information (e.g., see predetermined route information 106 shown in FIG. 1). The predetermined sprayer wayline information includes predetermined waylines for a sprayer to be operated in a field (e.g., see mobile machine 110 shown in FIG. 1-which can be a sprayer). The method 300, at step 304, also includes receiving, by the computing system, seeder location information (e.g., see location information 104-which can include seeder location information). The seeder location information includes locations of a seeder (e.g., see mobile machine 110a-which can be a seeder) moving and operating within the field at regular intervals of time. The method 300, at step 306, also includes using, by the computing system, the received information (e.g., see information 104 and 106) as two separate inputs for a model (e.g., see model 108) to generate sprayer route information (e.g., see model-determined route information 112). The sprayer route information includes a route for the sprayer in the field. In some cases, the method alternatively includes using, by the computing system, the received information as two separate inputs for a model (e.g., see model 108) to generate additional seeder route information (e.g., see model-determined route information 112). The additional seeder route information includes a route for an additional seeder to further plant seeds in the field.

Throughout the disclosure herein, the majority of examples refer to the use of the received information as two separate inputs of the model to generate sprayer route information; however, it is to be understood that such received information can be used as inputs of the model to generate additional seeder route information too. Also, throughout the disclosure herein, the majority of examples refer to the use and generation of routes or route information of seeders and sprayers; however, it is to be understood that some embodiments include the use and generation of routes and route information for applicators in general, which include, but are not limited to, seeders, planters, spreaders, and sprayers.

In some embodiments, the predetermined sprayer wayline information (e.g., see information 106) is derived from tramline information related corresponding to the tramlines in the field. In some embodiments, the predetermined sprayer wayline information is derived from a width of the sprayer. In some examples, the predetermined sprayer wayline information is derived from a categorization of the sprayer. In some cases, the categorization relates to a CTF score of the sprayer.

In some embodiments, as shown in FIG. 4, method 400 (which includes steps from method 300) further includes, at step 402, receiving, by the computing system, secondary information (e.g., see secondary information 114 shown in FIG. 1) associated with the seeder location information, e.g., see information 104. The received secondary information can be from within a time period including the regular intervals of time. Also, the method 400 includes using, by the computing system, the received secondary information as a third separate input to enhance the generation of the sprayer route information (at step 404). In some examples, the received secondary information includes topographical information of the field. In some cases, the topographical information of the field is collected during the operation of the one or more seeders during the regular intervals of time. In some embodiments, the received secondary information includes field size information, field shape information, field elevation information, field topographical information, soil type information, soil condition information, crop type information, crop lodging information, soil compaction information, weed density information, weed location information, field weather conditions information, or any combination thereof.

In some embodiments, the predetermined sprayer wayline information (e.g., see information 106) includes first initial waylines. In some cases, the seeder location information (e.g., see location information 104) includes second initial waylines. In some cases, the sprayer route information (e.g., see determined information 112) includes new waylines.

In some embodiments, as shown in FIG. 5, method 500 (which includes steps from method 300 or method 400) further includes, at step 502, controlling the sprayer (e.g., see machine 110), by the computing system, to follow the route of the sprayer route information, such as follow the new waylines, e.g., see information 112 and controllers 102d. In some cases, the generation of the sprayer route information generates a route to minimize fuel consumption by the sprayer during execution of the route. In some cases, the generation of the sprayer route information generates a route to minimize operation time of the sprayer during execution of the route. Also, in some examples, the generation of the sprayer route information generates a route to minimize soil compaction caused by the sprayer during execution of the route. In some embodiments, the route planning can consider multiple sprayers with similar or different capacities, depending on the embodiment. In some cases, the larger the sprayer unit, the more workload it can be assigned. Just to mention a few examples, other factors the model can consider in determining new route information include the kinematics of the sprayer or a seeder to make sure that the mobile machine can drive the route and not tip over from the topography. Also, traction reduction from environmental causes such as loose or wet ground can be considered by the model. Furthermore, the generation of the sprayer route information generates a route to minimize crop damage by the sprayer during execution of the route.

In some embodiments, as shown in FIG. 6, method 600 (which includes steps from method 300 or method 400) further includes, at step 506, training, by the computing system, the model (e.g., see model 708 and training 709a shown in FIG. 7) using the predetermined sprayer wayline information (e.g., see information 106), the seeder location information (e.g., see information 104), the secondary information (e.g., see information 114), the sprayer route information (e.g., see determined information 712 shown in FIG 7 or information 112 shown in FIG. 1), or a combination thereof. And, the method 600 further includes, at step 604, using, by the computing system, the trained model (e.g., see trained model 709b) to generate new sprayer routing information (e.g., see information 712) for a given different field. The method 600 also includes, at step 606, controlling the sprayer, by the computing system, to follow a new sprayer route of the sprayer route information according to the new sprayer routing information for the given different field that is outputted by the trained model. In some of such examples, the predetermined sprayer wayline information includes first initial waylines, the seeder location information includes second initial waylines, the sprayer route includes third initial waylines, and the new sprayer routing information includes new waylines for the given different field. In some of these examples and other embodiments, the given different field is the same field but with updated parameters for the field.

In some embodiments, the model 708 or 709 includes an artificial neural network. Also, in some examples, the model 708 or 709 can include deep learning-based determinations of machine routes that can be used for further analysis or for even controlling mobile machines or adjusting settings of mobile machines. By leveraging the power of deep learning, a model can capture complex patterns and dependencies within various data inputs into the model, allowing for more efficient machine status and settings determination, scheduling, and execution of routes, even in real time when the machine is operating. In order to leverage ANNs or deep learning processes some embodiments preprocess the inputs to the model (e.g., including inputs described with respect to method 600 as well as inputs including location information 104, predetermined route information 106, and secondary information 114).

In some examples, the technologies described herein can use a machine learning or deep learning based model to assist in the generating of sprayer routes or additional seeder routes based on a model and corresponding seeder routes or a derivative thereof that is used as input for the model. Or, in some examples, the technologies described herein can leverage another type of model that is not trained via machine learning or deep learning, such as a predetermined and static rules-based model for generating sprayer routes or additional seeder routes based on a model and corresponding seeder routes or a derivative thereof that is used as input for the model. Also, in some examples, the technologies described herein can use a model that is trained or frequently updated by a computing technique or other type of technique other than machine learning or deep learning, such as a dynamic rules-based model for generating sprayer routes or additional seeder routes based on a model and corresponding seeder routes or a derivative thereof that is used as input for the model.

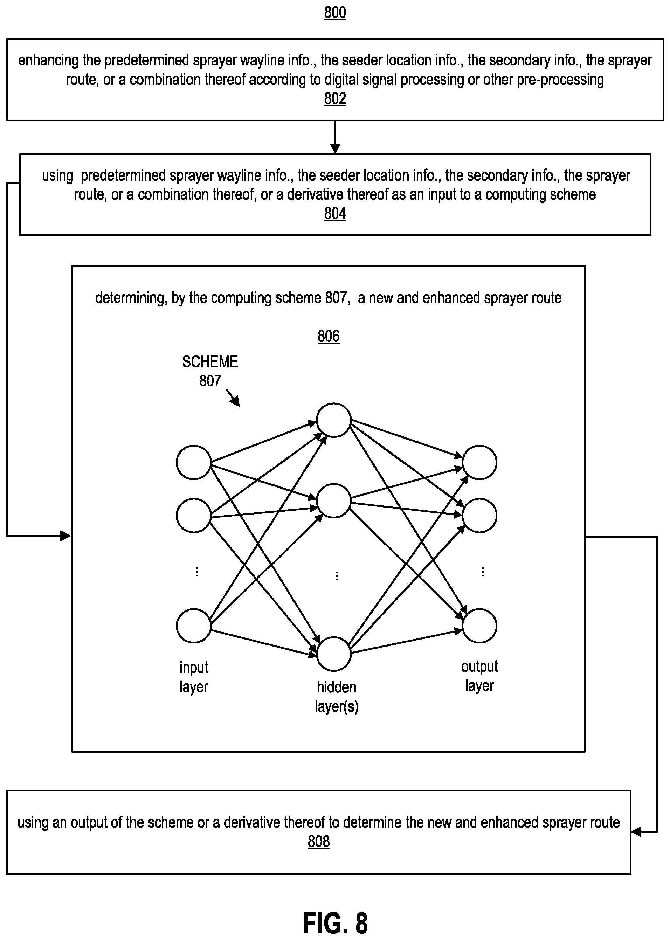

In some embodiments, a computing scheme (such as a trained model) can be used in determining sprayer routes or additional seeder routes (e.g., see FIGS. 7 and 8). In some cases, an artificial neural network (ANN) can even be used for such determinations. For example, the technologies described herein can leverage advancements in artificial intelligence (AI), machine learning, and deep learning, which makes it possible to develop more sophisticated models for generating sprayer routes or additional seeder routes. Such models can use a multitude of factors as inputs and enhance the generating sprayer routes or additional seeder routes from determining such routes by the prior art. The technologies can use deep learning models, based on Recurrent Neural Networks (RNNs) or Long Short-Term Memory (LSTM) networks, for example, or Transformer-based models. Such models can be used to generate sprayer routes or additional seeder routes that consider many factors related to the routes or the machines. Combined with GPS technology and the increasing digitization of mobile machinery, large amounts of data have become collectible to facilitate the creation and training of such models. The collected data can be used to train deep learning models, allowing them to learn complex patterns and dependencies between a multitude of factors and complex interactions between various factors, such as terrain, ground conditions, soil type, weather conditions, and machinery capabilities. Also, in some cases, the models described herein can facilitate control of mobile machines as well as adjust the settings of mobile machines, while considering various efficiencies and factors such as operational time efficiency, fuel efficiency, reduced soil compaction, and machine capabilities. The application of deep learning-based route planning in agriculture has the potential to revolutionize the way corresponding businesses operate. By leveraging AI, machine learning, and deep learning to route plan and even control mobile machines accordingly, operators of mobile machines can reduce costs, improve efficiency, and minimize the environmental impact of their operations.

FIG. 7 illustrates an example technical solution to the example technical problems described herein. The technical solution, shown in FIG. 7, can include or be a part of the techniques and technologies described herein (such as method 600 or method 800) and can provide specific technical solutions to at least overcome the technical problems mentioned in the background section or other parts of the application as well as other technical problems not described herein but recognized by those skilled in the art. FIG. 7 depicts the network 100 within which a computing system 702 receives various inputs. The various inputs include the location information 104, the predetermined route information 106, the secondary information 114, and trained-model-determined route information 712 which is also an output by the computing system as well as feedback to the system. These inputs and others can be received from other computing systems within the network 100 (e.g., see remote computing system 702a as well as computing systems 102 and 102a depicted in FIG. 1) via a communications network 101.

FIG. 7, similar to FIG. 1, depicts the network 100 having multiple mobile machines that can communicate with remote computing systems through the communications network 101 (e.g., see the mobile machines 110, 110a, and 110b and the computing systems 702 and 702a). The remote computing system 702a, analogous to 102a, is remote in that it is physically and geographically separated from the mobile machines of the network 100. It should also be understood that the remote computing system 702a can embody multiple remote computing systems. As shown in FIG. 7, the mobile machines of the network 100 can each include its own computing system including electronics such as connected sensors, cameras, busses, and computers (e.g., see computing system 702, network interface 102b, sensors 102c, and controllers 102d). A difference between system 702 and system 102 (as shown in FIG. 1) is that system 702 includes model 708, which is a trainable model. Similar to system 102, the computing system 702 of the mobile machine 110, shown in FIG. 7, can include a processor, memory, a communication interface and one or more sensors that can make the mobile machine an individual computing device. Also, in some embodiments, like remote system 102a, the remote computing system 702a can be a computing device and a part of a cloud computing system.

As shown in FIG. 7, similar to FIG. 1, the mobile machines are planters or sprayers (e.g., see machines 110, 110a, and 110b). In some embodiments, a mobile machine can be or include a vehicle in that it is self-propelling. Also, in some embodiments, the mobile machine can be a part of a group of similar machines or a group of different types of mobile machines. And, also similarly, the network 101, depicted in FIG. 7, can include one or more local area networks (LAN(s)) and/or one or more wide area networks (WAN(s)) and can take on the various different embodiments described for with reference to FIG. 1. For example, in some embodiments, the network 101, depicted in FIG. 7, includes the Internet and/or any other type of interconnected communications network. And, similarly, at least each computing component of the network 101, as shown in FIG. 7 (including computing systems 702 and 702a), can be or include a computing system in any of the forms of computing systems described herein.

The various inputs include or are related to some of the efficiencies and factors (such as operational time efficiency, fuel efficiency, reduced soil compaction, and machine capabilities) that are considered by the computing system 702 in the determination of route information 712. As shown, the computing system 702 includes a model 708 that is trainable and that can be trained through various machine learning and deep learning techniques (e.g., see training 709a), and the result of the training provides a trained model 709b. Once the model is trained (e.g., see trained model 709b), it can be used to generate new and enhanced trained-model-determined route information 712. Also, as shown, the computing system 702 is a part of a mobile machine 110 as are the inputs and outputs of the computing system (including the inputs of the model 708 and the trained model 709b and the output of the trained model (or the determined route information 712) or, to put it another way, an input of controllers 102d. In some embodiments, the computing system 702 is local to the machine 110 only. And, in some embodiments, the system 702 and the inputs and outputs of the computing system are entirely or partially part of a remote system in that the remote system is physically and geographically separated from the machine 110 but communicates with the system or controller of the machine over a telecommunications or computer network (e.g., see remote computing system 702a and network 101).

In some embodiments, the trained model 709b is configured to generate the trained-model-determined route information 712 to minimize fuel consumption of the mobile machine 110 when performing a given field operation. Also, in some examples, the trained model 709b is configured to generate the route information 712 to minimize operation time of the mobile machine 110 when performing a given field operation. Also, in some examples, the trained model 709b is configured to generate the route information 712 to minimize ground or soil compaction caused by the mobile machine 110 when performing a given field operation.

The model evaluation or selection can be a part of any one of the methods described herein. The selection of a model would occur prior to use of the model 108 or model 708 or one of the respective method steps described herein that use a model to determine route information. In some examples, the evaluation can include the evaluation of the trained model's performance on a dataset to ensure its generalization is valid to unseen data (e.g., evaluating the trained model 709b). The evaluation can use metrics, such as mean absolute error, root mean squared error, or custom metrics relevant to the specific application. The methods described herein can include model deployment. The deployment can include integrating the trained model into the mobile machine's control system to control the mobile machine directly or through the settings of the machine. For example, the deployment can include integrating the trained model into the mobile machine's control system to provide real-time updates and enhancements to settings as well as planning and optimization of settings.

In some embodiments, the model 108 or the model 708 can benefit from continuous improvement such as regularly updating the model with new data to ensure its performance remains accurate and up-to-date. For example, any of the model inputs described herein can be used for regularly updating the model as can any of the outputs of the model or derivatives thereof be used. Also, improving the model 108 or the model 708 can include monitoring the model's performance and retraining or fine-tuning the model per application of it or as needed accordingly. With respect to model 708, by implementing deep learning- or machine learning-based machine operations, statuses, and settings determinations, the technologies described herein can assist in the route planning and control of mobile machines. With such technologies using deep or machine learning, it is possible to use machine learning to (1) plan future operations, (2) control mobile machines, (3) adjust the settings of mobile machines in real time, and (3) generate, update, enhance, or schedule settings or operations in general. And, the aforesaid features can be implemented for various factors, such as operational time efficiency, fuel efficiency, reduced soil compaction, and machine capabilities. This can lead to improved productivity, cost savings, and better overall sustainability of operations.

Alternatively, a less costly or less computing resource intensive approach can be used to generate or update the model of the mobile machine 110, e.g., see model 108 of computing system 102. And, such an approach can reduce the use of resources by not using machine learning or deep learning processes. In some examples, the technologies described herein can leverage another type of model for model 108 that is not trained via machine learning or deep learning, such as a predetermined and static rules-based model for route planning and wayline generation. Furthermore, in some examples, the technologies described herein can use a model that is trained or frequently updated by a computing technique or other type of technique other than machine learning or deep learning, such as a dynamic rules-based model for route planning and wayline generation.

Referring back to the deep learning or machine learning capabilities of computing systems 702 and 702a shown in FIG. 7, FIG. 8 depicts method 800 which makes use of such technologies. FIG. 8 illustrates a method 800 which is in accordance with some embodiments of the present disclosure that use deep or machine learning. Method 800 is performed by any one of the computing systems described herein (e.g., see computing system 702, 702a, or 200 depicted in FIGS. 7 and 2 respectively). In some systems of the technologies disclosed herein, any steps of embodiments of the methods described herein are implementable by executing instructions corresponding to the steps, which are stored in memory (such as the instructions 214).

As shown in FIG. 8, method 800 includes, at step 802, the computing system enhancing the predetermined sprayer wayline information, the seeder location information, the secondary information, the sprayer route, or a combination thereof according to digital signal processing or other pre-processing. At step 804, the computing system uses the predetermined sprayer wayline information, the seeder location information, the secondary information, the sprayer route, or a combination thereof, or a derivative thereof as an input to a computing scheme 807. At step 806, the computing system specifically determines, by the computing scheme 807, a new and enhanced sprayer route. And, at step 808, the computing system uses an output of the scheme or a derivative thereof to determine the new and enhanced sprayer route. Regarding the computing scheme 807 or any other computing scheme described herein, the scheme, in some examples, includes an ANN. And, in some examples, the ANN is part of a deep learning process that determines the new and enhanced sprayer route or is a basis for the determination of the route (e.g., see step 808). The deep learning process, in some examples, includes a CNN or a network of convolutional neural networks CNNs.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
receiving, by a computing system (102, 200), predetermined sprayer wayline information (106) (step 302), the predetermined sprayer wayline information comprising predetermined waylines for a sprayer (110) to be operated in a field;
receiving, by the computing system, seeder location information (104) (step 304), the seeder location information comprising locations of a seeder (110a) moving and operating within the field at regular intervals of time; and
using, by the computing system, the received information as two separate inputs for a model (108) to generate sprayer route information (112) (step 306), the sprayer route information comprising a route for the sprayer in the field.

2. The method according to claim 1, wherein the predetermined sprayer wayline information (106) is:
derived from tramline information related corresponding to the tramlines in the field; or
is derived from a width of the sprayer (110).

3. The method according to claim 1, wherein the predetermined sprayer wayline information (106) is derived from a categorization of the sprayer (110); optionally wherein the categorization relates to a controlled traffic farming (CTF) score of the sprayer (110).

4. The method according to any one of the preceding claims, further comprising:
receiving, by the computing system (102, 200), secondary information (114) associated with the seeder location information (104), wherein the received secondary information is from within a time period comprising the regular intervals of time (step 402); and
using, by the computing system, the received secondary information as a third separate input to enhance the generation of the sprayer route information (112) (step 404).

5. The method according to claim 4, wherein the received secondary information (114) comprises topographical information of the field; optionally wherein the topographical information of the field is collected during the operation of the one or more seeders (110a) during the regular intervals of time.

6. The method according to claim 4, wherein the received secondary information (114) comprises field size information, field shape information, field elevation information, field topographical information, soil type information, soil condition information, crop type information, crop lodging information, soil compaction information, weed density information, weed location information, field weather conditions information, or any combination thereof.

7. The method according to any one of the preceding claims,
wherein the predetermined sprayer wayline information (106) comprises first initial waylines,
wherein the seeder location information (104) comprises second initial waylines, and
wherein the sprayer route information (112) comprises new waylines.

8. The method according to any one of the preceding claims, further comprising controlling the sprayer (110), by the computing system (102, 200), to follow the route of the sprayer route information (112) (step 502).

9. The method according to any one of the preceding claims, wherein the generation of the sprayer route information (112) generates:
a route to minimize fuel consumption by the sprayer (110) during execution of the route;
a route to minimize operation time of the sprayer (110) during execution of the route; and/or
a route to minimize soil compaction caused by the sprayer (110) during execution of the route.

10. The method according to any one of the preceding claims, further comprising:
training, by the computing system (102, 200), the model (708) using the predetermined sprayer wayline information (106), the seeder location information (104), the secondary information (114), the sprayer route information (112), or a combination thereof (step 602); and
using, by the computing system, the trained model (709b) to generate new sprayer routing information (712) for a given different field (step 604).

11. The method according to claim 10, further comprising controlling the sprayer (110), by the computing system (102, 200), to follow a new sprayer route of the sprayer route information (112) according to the new sprayer routing information for the given different field (step 606).

12. The method according to claim 11,
wherein the predetermined sprayer wayline information (106) comprises first initial waylines,
wherein the seeder location information (104) comprises second initial waylines,
wherein the sprayer route comprises third initial waylines, and
wherein the new sprayer routing information comprises new waylines for the given different field.

13. The method according to any one of claims 10 to 12, wherein the given different field is merely the field recited in claim 1 with updated parameters for the field.

14. A system (102, 200) comprising: at least one processor; and memory in communication with the at least one processor and storing instructions that are executable by the at least one processor to cause the at least one processor to:
receive predetermined sprayer wayline information (106), the predetermined sprayer wayline information comprising predetermined waylines for a sprayer (110) to be operated in a field;
receive seeder location information (104), the seeder location information comprising locations of a seeder (110a) moving and operating within the field at regular intervals of time; and
use the received information as two separate inputs for a model (108) to generate sprayer route information (112), the sprayer route information comprising a route for the sprayer in the field.

15. A non-transitory computer-readable medium storing instructions that when executed cause a computing device to:
receive predetermined sprayer wayline information (106), the predetermined sprayer wayline information comprising predetermined waylines for a sprayer (110) to be operated in a field;
receive seeder location information (104), the seeder location information comprising locations of a seeder (110a) moving and operating within the field at regular intervals of time; and
use the received information as two separate inputs for a model (108) to generate sprayer route information (112), the sprayer route information comprising a route for the sprayer in the field.
